# EUROPEAN PATENT APPLICATION

(11) **EP 4 205 908 A1**
(43) Date of publication of application: **05.07.2023**
(21) Application number: 21861099.6
(22) Date of filing: 28.07.2021
(51) Int. Cl.: B25B 23/14, G06Q 10/06, G06Q 50/04, G06Q 50/08

(54) **WORK MANAGEMENT SYSTEM, WORK INFORMATION ACQUISITION DEVICE, INFORMATION MANAGEMENT DEVICE, AND PROGRAM**

(30) Priority: 27.08.2020 JP 2020143910
(71) Applicant: Panasonic Holdings Corporation, Osaka 571-8501 (JP)
(72) Inventor: IKEDA, Masaki, Osaka-shi, Osaka 540-6207 (JP); MIWA, Tatsuya, ka-shi, Osaka 540-6207 (JP)
(74) Representative: Müller-Boré & Partner Patentanwälte PartG mbB
(86) International application number: PCT/JP2021/027874
(87) International publication number: WO 2022/044671

(57) **Abstract**

An object of the present invention is to provide a work management system, a work information acquisition device, an information management device, and a program which enable a questionable point, if any, in work information to be immediately confirmed with a worker. A work management system (WM1) includes a tool (1), a work information acquisition device (2), and an information management device (3). The work information acquisition device (2) is configured to acquire work information on a content of work from the tool (1). The information management device (3) is configured to acquire the work information from the work information acquisition device (2). the work information acquisition device (2) includes a telephone number transmitter (212) configured to transmit data on a telephone number to the information management device (3) at at least one of a timing at which the work is started or a timing at which a request from the information management device (3) is generated. The information management device (3) includes a presentation unit (34) configured to present the telephone number in accordance with the data on the telephone number received from the telephone number transmitter (212).

## Description

### Technical Field

The present disclosure relates to a work management system, a work information acquisition device, an information management device, and program.

### Background Art

Patent Literature 1 discloses a work management system which uses, as a work management device configured to manage work carried out by using a tool, a smart device such as a smartphone carried by a worker or a management device at a location remote from a work site.

The work management device includes a work information acquirer, a location information acquirer, a work target information acquirer, and an information management unit. The work information acquirer is configured to acquire work information on the content of the work from the tool. The location information acquirer is configured to acquire location information on a location where the work is carried out onto a work target by using the tool. The work target information acquirer is configured to acquire work target information identifying the work target in accordance with information read from the work target. The information management unit is configured to store the work information, the location information, and the work target information which are in association with one another in a storage.

Since the work information, the location information, and the work target information are stored in association with one another in the storage, the work management device can manage, with reference to these pieces of information, which work target is worked on which location and based on which work content, and can make work history.

Moreover, since the management device at the location remote from the work site manages the work information, the location information, and the work target information, an administrator who uses the management device can give, to a worker at the site, an instruction on the work or guidance as to the work content.

In the work management system according to the Patent Literature 1, the administrator who uses the management device can give, to the worker at the site, the instruction on the work or the guidance as to the work content. However, Patent Literature 1 fails to disclose how the administrator acquires a contact destination of the worker at the site, and therefore, if a questionable point is found in the work information, the administrator cannot immediately confirm the questionable point with the worker.

### Citation List

### Patent Literature

Patent Literature 1: JP 2016-91316 A

### Summary of Invention

An object of the present disclosure is to provide a work management system, a work information acquisition device, an information management device, and a program which enable a questionable point, if any, in work information to be immediately confirmed with a worker.

A work management system according to an aspect of the present disclosure includes a tool to be used to carry out work onto a work target, a work information acquisition device configured to acquire work information on a content of the work from the tool, and an information management device configured to acquire the work information from the work information acquisition device. The work information acquisition device includes a voice communicator configured to perform telephonic communication by using a telephone number over a public communication network and a telephone number transmitter configured to transmit data on the telephone number to the information management device at at least one of a timing at which the work is started or a timing at which a request from the information management device is generated. The information management device includes a presentation unit configured to present the telephone number in accordance with the data on the telephone number received from the telephone number transmitter.

A work information acquisition device according to an aspect of the present disclosure is configured to acquire work information on a content of work from a tool to be used to carry out the work onto a work target. The work information acquisition device includes a voice communicator configured to perform telephonic communication by using a telephone number over a public communication network and a telephone number transmitter configured to transmit data on the telephone number to an information management device at at least one of a timing at which the work is started or a timing at which a request from the information management device is generated.

An information management device according to an aspect of the present disclosure is configured to acquire the work information from the work information acquisition device. The information management device includes a presentation unit configured to present the telephone number in accordance with the data on the telephone number received from the telephone number transmitter.

A program according to an aspect of the present disclosure is configured to cause a computer system to function as a work information acquisition device configured to acquire work information on a content of work from a tool to be used to carry out the work onto a work target. The program is configured to cause the computer system to function as a call controller configured to control a voice communicator configured to perform telephonic communication by using a telephone number over a public communication network and a telephone number transmitter configured to transmit data on the telephone number to an information management device at at least one of a timing at which the work is started or a timing at which a request from the information management device is generated.

A program according to an aspect of the present disclosure is configured to cause a computer system to function as an information management device configured to acquire the work information from the work information acquisition device. The program is configured to cause the computer system to function as a controller configured to present the telephone number on a presentation unit in accordance with data on the telephone number received from the telephone number transmitter.

### Brief Description of Drawings

FIG. 1 is a block diagram of a work management system of an embodiment;
FIG. 2 is a configuration diagram of a schematic system configuration of the work management system;
FIG. 3 is a schematic diagram of an example of a tool to be applied to the work management system;
FIG. 4 is a sequence diagram of operation of the work management system; and
FIG. 5 is a view of a screen to be displayed on the tool to be applied to the work management system.

### Description of Embodiments

The following embodiment generally relates to work management systems, work information acquisition devices, information management devices, and programs. More specifically, the following embodiment relates to a work management system, a work information acquisition device, an information management device, and program. which are configured to acquire work information on a content of work from a tool. Note that the embodiment described below is a mere example of embodiments of the present disclosure. The present disclosure is not limited to the following embodiment, and various modifications may be made based on design and the like as long as the effect of the present disclosure is achieved.

### (1) Overview of Work Management System

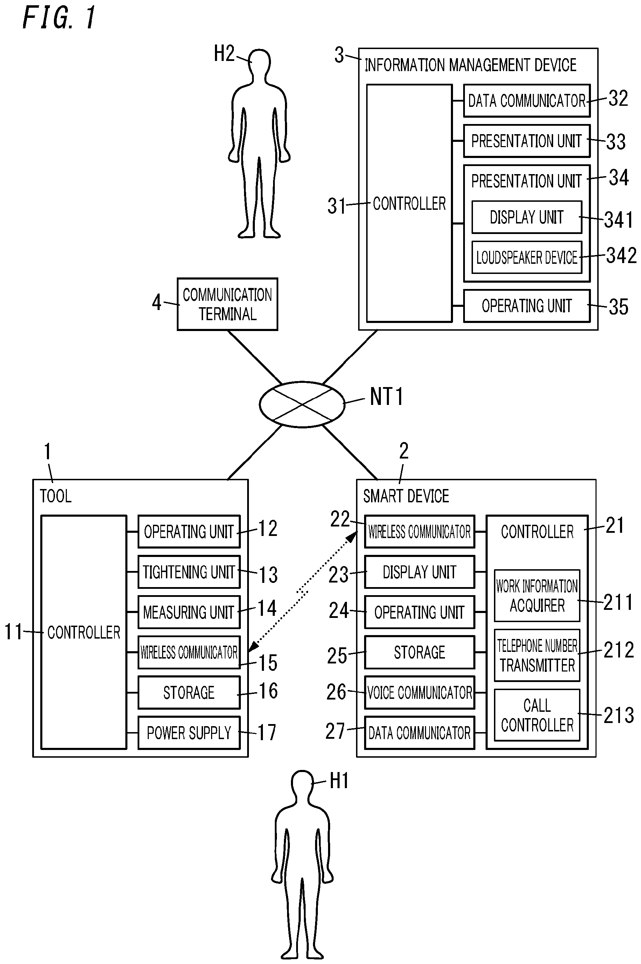

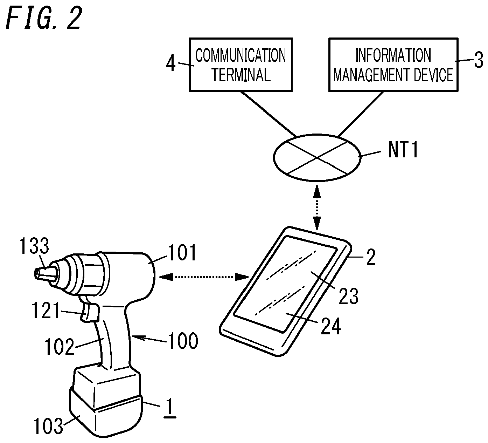

FIG. 1 is a schematic block diagram of a work management system WM1 of the present embodiment, and FIG. 2 is a schematic system configuration diagram of the work management system WM1 of the present embodiment.

The work management system WM1 of the present embodiment includes a tool 1, a smart device 2 which is the work information acquisition device of the present disclosure, and an information management device 3. The tool 1 and the smart device 2 are carried by a worker H1 who carries out work, for example, at a factory or a construction site such as a building site. The information management device 3 is to be used by an administrator H2 who manages the construction site.

The tool 1 is used to carry out the work onto a work target. The smart device 2 acquires work information on a content of the work from the tool 1. The information management device 3 acquires the work information from the smart device 2. The smart device 2 includes a voice communicator 26 and a telephone number transmitter 212. The voice communicator 26 has a function of performing telephonic communication by using a telephone number over a public communication network NT1. The telephone number transmitter 212 transmits data on the telephone number to the information management device 3 at at least one of a timing at which the work is started or a timing at which a request from the information management device 3 is generated. The information management device 3 includes a presentation unit 34 configured to present the telephone number in accordance with the data on the telephone number received from the telephone number transmitter 212.

The administrator H2 is informed of the telephone number of the smart device 2 used by the worker H1 carrying out the work at the construction site at at least one of a timing at which the work is started or a timing at which the request from the information management device 3 is generated, so that the administrator H2 can know the contact number of the worker H1. The administrator H2 monitors the work information acquired from the smart device 2, and if the work information includes any questionable point, the administrator H2 makes a phone call to the smart device 2 of the worker H1 by using the telephone number of which the administrator H2 has been informed. This enables the administrator H2 to immediately confirm the questionable point with the worker H1. That is, the work management system WM1 enables a questionable point, if any, in the work information to be confirmed with the worker H1.

### (2) Tool

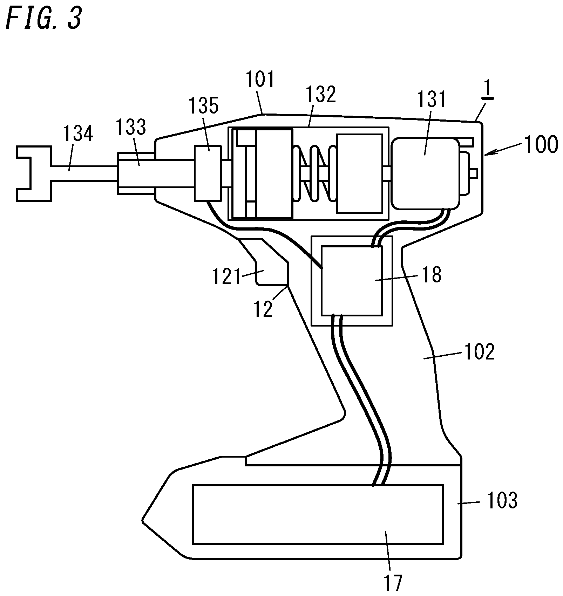

The tool 1 will be described with reference to FIGS. 1 and 3. The tool 1 is a tool which is used, for example, at a factory or a building site and which is designed for a business operator, and in FIG. 1, the worker H1 uses the tool 1. The tool 1 is used to carry out work of fastening a work target (e.g., a solar cell panel) to an attaching target (e.g., mount) with a plurality of tightening members (e.g., screws, bolts) in accordance with a design drawing and or a job order. Examples of the tool 1 include an electrically powered impact driver configured to rotate, and apply impact force to, the tightening member to tighten the tightening member. Note that the tool 1 is not limited to the electrically powered impact wrench but may be an electrically powered impact wrench, or an electrically powered drill screwdriver which applies no striking force or an electrically powered torque wrench. Moreover, the tool 1 is not limited to an electrically powered tool but may be, for example, an air tool driven by compressed air (e.g., screw driver or a nailing machine).

The tool 1 includes a controller 11, an operating unit 12, a tightening unit 13, a measuring unit 14, a wireless communicator 15, a storage 16, and a power supply 17 (see FIG. 1).

The tool 1 includes a body 100. The body 100 includes: a body part 101 having a cylindrical shape; and a grip part 102 protruding from a circumferential surface of the body part 101 in a radial direction (see FIG. 3). The body part 101 has one end in an axial direction, and from the one end, an output shaft 133 protrudes. The output shaft 133 is provided with a socket 134. The grip part 102 has one end (lower end in FIG. 2) to which a battery pack 103 is detachably attached, and the battery pack 103 includes a case which is made of a resin and in which the power supply 17 is housed.

The grip part 102 houses a circuit board 18 therein. On the circuit board 18, circuits included in the controller 11 and other components are mounted.

The operating unit 12 includes a trigger switch 121 provided to the grip part 102. In response to an operation given to the trigger switch 121, the operating unit 12 outputs, to the controller 11, an operation signal representing a control amount proportional to a pull-in amount (operation amount) of the trigger switch 121. The controller 11 generates a control signal according to the operation signal and outputs the control signal to a drive circuit not shown in the figure. The drive circuit controls rotation of a motor 131 included in the tightening unit 13 in accordance with the control signal received from the controller 11. The motor 131 will be described later.

The tightening unit 13 includes the motor 131, an impact mechanism 132, and the output shaft 133. Rotational force of a rotary shaft of the motor 131 is transmitted via the impact mechanism 132 to the output shaft 133. The output shaft 133 is provided with the socket 134, and to the socket 134, a bit (e.g., driver bit) suitable for a member which is the work target is detachably attached. The impact mechanism 132 is configured to, when an output torque is less than or equal to a prescribed level, transmit the rotation of the rotary shaft of the motor 131 to the output shaft 133 such that the rotation speed of the output shaft 133 is slower than the rotation speed of the rotary shaft of the motor 131. The impact mechanism 132 is configured to, when the output torque exceeds the prescribed level, add striking force in a rotation direction to the output shaft 133 and screw a screw or a bolt which is the work target. The motor 131 and the impact mechanism 132 is be housed in the body part 101.

The measuring unit 14 measures tightening force (tightening torque) provided by the tightening unit 13. The measuring unit 14 measures a torque applied to the output shaft 133 by the torque sensor 135 of a magnetostriction type attached to the output shaft 133, and from a measured value by the torque sensor 135, the measuring unit 14 obtains the tightening force. Note that the measuring unit 14 may count, by using a vibration sensor, the number of times the impact mechanism 132 applies a striking blow to the output shaft 133, and from the number of times of the striking blows, the measuring unit 14 may obtain the tightening force.

The wireless communicator 15 is a communication module which performs short-range (within a distance range of about tens of meters) wireless communication based on a communication schema requiring no radio operator license. Examples of such a communication scheme include a communication scheme based on IEEE802.15.1 standardized by the Institute of Electrical and Electronics Engineers, Inc. (IEEE). Moreover, the communication scheme may be a scheme based on the standard of Bluetooth (registered trademark), BLE (Bluetooth Low Energy), ZigBee (registered trademark), or the like. The wireless communicator 15 performs wireless communication with the smart device 2 based on any of the communication schemes.

The storage 16 includes Read Only Memory (ROM) and Random Access Memory (RAM). The storage 16 stores a control program to be executed by the controller 11. Moreover, in the storage 16, an individual identification information assigned to the tool 1 is registered.

The power supply 17 is housed in the battery pack 103. The power supply 17 includes a rechargeable battery and is configured such that the battery pack 103 detached from the grip part 102 is connected to a charger to charge the rechargeable battery in the power supply 17. The power supply 17 supplies, to the motor 131 and an electric circuit including the controller 11, electric power charged in the rechargeable battery as electric power required for operation of the motor 131 and the electric circuit including the controller 11.

The controller 11 generates information on the operation of the tool 1 as work information representing the content of work carried out onto a member which is the work target by the worker H1. The controller 11 causes the wireless communicator 15 to transmit the work information thus generated to the smart device 2.

The tool 1 includes, for example, a computer system such as a microcomputer, and the computer system executes a program (program for the tool) stored in the storage 16, thereby implementing some or all of functions of the controller 11, the measuring unit 14, and the wireless communicator 15. The computer system includes, as a main hardware component, a processor which operates in accordance with a program. The type of the processor is not particularly limited, as long as the processor is configured to implement a function(s) by executing the program. The processor may be made up of a single or a plurality of electronic circuits including a semiconductor integrated circuit (IC) or a largescale integrated circuit (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). A field programmable gate array (FPGA) programmable after the manufacturing of an LSI or a reconfigurable logical device that allows reconfiguration of a connection relationship in the interior of an LSI or setup of a circuit section in the interior of the LSI may also be used for the same purpose. The plurality of electronic circuits may be collected on a single chip or may be distributed on a plurality of chips. The program is stored in a non-transitory recording medium such as computer readable ROM, an optical disk, or a hard disk drive. The program may be stored in the non-transitory recording medium in advance or may be supplied to the non-transitory recording medium over a wide-area communication network including, for example, the Internet.

### (3) Smart Device

The smart device 2 will be described with reference to FIG. 1.

The smart device 2 is a portable smart device (e.g., a smartphone or a tablet computer) carried by the worker H1 who uses the tool 1. The smart device 2 is carried by the worker H1 also while the worker H1 carries out the work by using the tool 1.

The smart device 2 includes a controller 21, a wireless communicator 22, a display unit 23, an operating unit 24, a storage 25, the voice communicator 26, and a data communicator 27.

The wireless communicator 22 is a communication module configured to perform short range wireless communication based on the same communication scheme as the wireless communicator 15 of the tool 1. In the wireless communicator 22 which serves as a master device in the present embodiment, the wireless communicator 15 of the tool 1 is registered as a slave device, and between the wireless communicator 15 and the wireless communicator 22, wireless communication is performed. Thus, the tool 1 and the smart device 2 which are used by the same worker H1 are configured not to communicate with a tool 1 and a smart device 2 of another worker in a communication area. Note that the communication between the tool 1 and the smart device 2 is not limited to wireless communication but may be wired communication.

Note that a registration process (pairing process) in which the wireless communicator 22 is the master device and the wireless communicator 15 is the slave device is started by the trigger switch 121 (see FIG. 3) of the tool 1 being pulled. Flashing, solidly lighting, light color, and the like of a light-emitting element provided to the tool 1 notifies the worker H1 of the success or failure of the registration process.

The display unit 23 includes, for example, a thin display such as a liquid crystal display or an organic Electro Luminescence (EL) display, and the controller 21 controls a displayed content of the display unit 23.

The operating unit 24 includes, for example, a touch switch provided to the thin display included in the display unit 23 and outputs, to the controller 21, an operation signal according to an operation given by the worker H1 with his/her finger or a pen.

The storage 25 includes ROM and RAM, and an electrically rewritable nonvolatile memory such as Electrically Erasable and Programmable Read Only Memory (EEPROM). The storage 25 stores: a program; the telephone number of the smart device 2; and pieces of data such as the work information acquired by the smart device 2 from the tool 1 and identification information of the tool 1. The program is a program (application for the work) to be executed by the controller 21 so as to cause the smart device 2 to function as the work information acquisition device. Note that the storage 25 may be built-in memory or a memory card to be detachably connected to a card slot of the smart device 2.

The voice communicator 26 includes a microphone and a loudspeaker and performs telephonic communication by using the telephone number of the smart device 2 over the public communication network NT1. A call by using the voice communicator 26 is controlled by the controller 21.

The data communicator 27 has a communication interface function of transmitting and receiving data over the public communication network NT1.

The public communication network NT1 preferably includes the Internet, a mobile telephone network, land-line phone network, and the like. The voice communicator 26 and the data communicator 27 preferably perform, as communication over the public communication network NT1, communication based on any of standards such as Long Term Evolution (LTE), 4th Generation (4G), and 5th Generation (5G). Moreover, the communication over the public communication network NT1 is preferably communication based on a standard made by a country in which the work management system WM1 is used.

The controller 21 includes a work information acquirer 211, the telephone number transmitter 212, and a call controller 213. The controller 21 includes, for example, a computer system such as a microcomputer, and the computer system executes a program stored in the storage 25, thereby implementing some or all of the functions of the controller 21.

The work information acquirer 211 collects, from the tool 1, work information representing the content of work carried out onto a member which is the work target by the worker H1 through communication with the tool 1 by the wireless communicator 22. The work information acquirer 211 stores the work information acquired from the tool 1 in the storage 25.

The telephone number transmitter 212 transmits the data on the telephone number of the smart device 2 stored in the storage 25 from the data communicator 27 over the public communication network NT1 to the information management device 3.

The call controller 213 controls the voice communicator 26 which performs telephonic communication.

### (4) Information Management Device

The information management device 3 will be described with reference to FIG. 1.

The information management device 3 is, for example, a personal computer or a tablet computer installed in a construction office in a construction site, a construction company remote from the construction site, or the like, and is used by the administrator H2 who manages the construction site.

The information management device 3 includes a controller 31, a data communicator 32, a storage 33, the presentation unit 34, and an operating unit 35.

Similarly to the data communicator 27, the data communicator 32 has a communication interface function of transmitting and receiving data over the public communication network NT1.

The storage 33 includes ROM and RAM, and an electrically rewritable nonvolatile memory such as EEPROM. The storage 33 stores, for example: a program; personal information such as the telephone number, password, name, and affiliation of each of a plurality of workers; and the work information acquired by the information management device 3 from the smart device 2. The program is a program for information management to be executed by the controller 31.

The presentation unit 34 includes a display unit 341 and a loudspeaker device 342.

The display unit 341 includes, for example, a thin display such as a liquid crystal display or an organic Electro Luminescence (EL) display, and the controller 31 controls a displayed content of the display unit 341.

The loudspeaker device 342 includes a loudspeaker which outputs a voice, a driver which drives the loudspeaker, and the like, and the loudspeaker device 342 outputs a message, a chime sound, a buzzer sound, and the like. The sound output from the loudspeaker device 342 is controlled by the controller 31.

The operating unit 35 is a pointing device (e.g., a mouse, a touch screen, a touch pad), a keyboard, or the like, generates an operation signal according to an operation given by the administrator H2, and outputs the operation signal to the controller 31.

The controller 31 receives the operation signal from the operating unit 35 and controls operation of each of the data communicator 32, the storage 33, and the presentation unit 34. The controller 31 includes, for example, a computer system such as a microcomputer, and the computer system executes a program stored in the storage 33, thereby implementing some or all of the functions of the controller 31.

### (5) Communication Terminal

The communication terminal 4 is a smartphone or a mobile phone carried by the administrator H2 and has a telephone function which enables a call to be made over the public communication network NT1. That is, the telephone function enables a call to be made between the communication terminal 4 and the smart device 2 over the public communication network NT1.

### (6) Operation of Work Management System

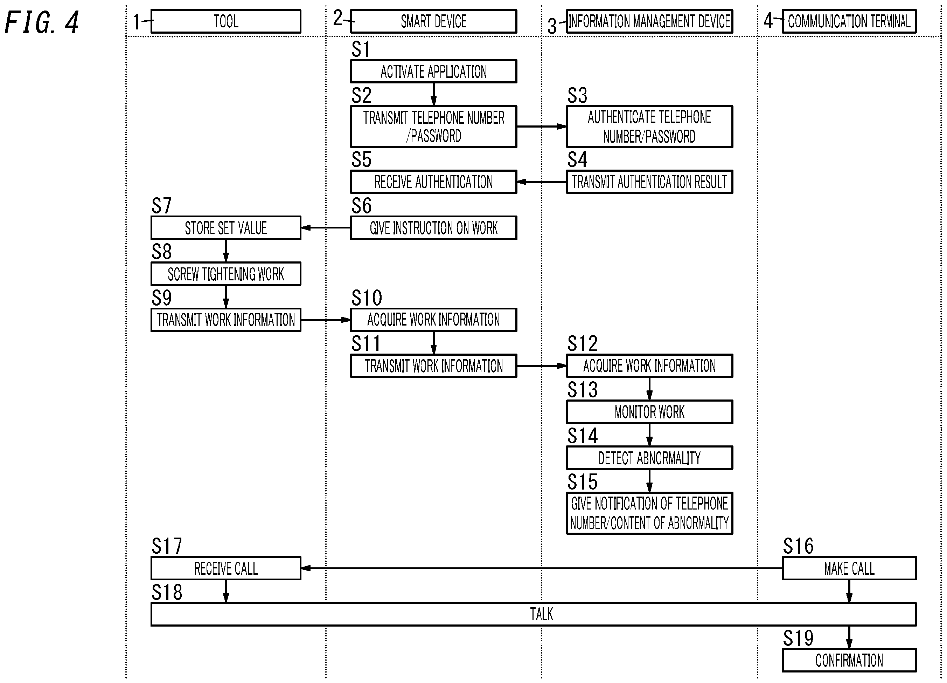

Next, operation of the work management system WM1 will be described with reference to FIG. 4. In the following, screw tightening work at the time of fixing a solar cell panel to a mount will be described as an example.

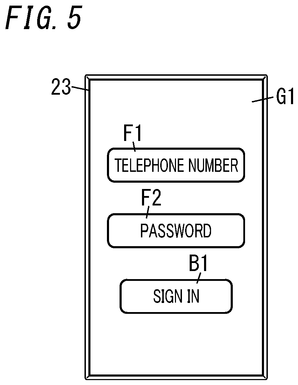

The storage 25 of the smart device 2 stores, as the application for the work, a program for causing the smart device 2 to function as the work information acquisition device. In response to activation of the application for the work by an operation given by the worker H1 to the operating unit 24 of the smart device 2 at the start of the work (S 1), the controller 21 causes the display unit 23 to display a start screen G1 shown in FIG. 5. The start screen G1 includes a first input field F1, a second input field F2, and a sign-in button B1. The worker H1 gives an operation to the operating unit 24, thereby inputting the telephone number of the smart device 2 to the first input field F 1 and inputting a password to the second input field F2. The telephone number corresponds to the identification information of the worker H1.

Note that the data on the telephone number of the smart device 2 is stored in the storage 25. Thus, the controller 21 may read the data on the telephone number from the storage 25 in response to the activation of the application for the work and may automatically input the telephone number to the first input field F1. In this case, the worker H1 does not have to manually input the telephone number of the smart device 2 to the first input field F1.

Then, the worker H1 gives an operation to the operating unit 24, thereby pressing the sign-in button B1, in response to which the telephone number transmitter 212 causes the data communicator 27 to transmit, to the information management device 3, pieces of data on the telephone number and the password thus input (S2). That is, the smart device 2 transmits the data on the telephone number to the information management device 3 at the time of the start of the work by using the tool 1.

In the information management device 3, the data communicator 32 receives the pieces of data on the telephone number and the password, and the controller 31 performs an authentication process of the telephone number and the password thus received (S3). The storage 33 stores data on a pair of the telephone number and the password of each of a plurality of workers in advance as registered data for authentication. The controller 31 determines that authentication is successful if the pair of the telephone number and the password thus received is included in the registered data for authentication. The controller 31 determines that the authentication is failed if the pair of the telephone number and the password thus received is not included in the registered data for authentication. The data communicator 32 transmits an authentication result to the smart device 2 (S4).

In the smart device 2, the data communicator 27 receives the authentication result (S5). If the authentication result is "authentication success", the controller 21 causes the display unit 23 to display instruction information (work instruction information) on work to be carried out. If the authentication result is "authentication failed", the controller 21 causes the display unit 23 to re-display the start screen G1 together with a message informing that the authentication is failed.

If the work to be carried out is screw tightening work, the work instruction information include pieces of information on a location where the screw tightening work is to be carried out, the product name of the work target (the name of a member to be fastened with a screw , for example, solar cell panel), the number of screws (bolts) which are to fasten the work target, the set value of tightening force, and the like. Moreover, the controller 21 of the smart device 2 transmits the information on the set value of the tightening force from the wireless communicator 22 to the tool 1 (S6). When the wireless communicator 15 in the tool 1 receives, from the smart device 2, the information on the set value of the tightening force, the controller 11 causes the storage 16 to store the information on the set value of the tightening force (S7). Note that each time the screw tightening work is carried out once by using the tool 1, the smart device 2 may transmit, to the tool 1, information on the set value of the tightening force for next screw tightening work. Alternatively, the smart device 2 may transmit, to the tool 1, information on set values of the tightening force for a plurality of number of times of work (e.g., several types of work to be carried out on the day) in the order of the several types of work to be carried out. In this case, the controller 11 of the tool 1 causes the storage 16 to store the information on the set values of the plurality of number of times of work, and based on the set values sequentially read from the storage 16, the controller 11 at least controls the tightening force of the tightening unit 13.

The worker H1 sets a screw on a member which is the work target, and the worker H1 then gives an operation to the operating unit 12 of the tool 1, in response to which the controller 11 rotates the tightening unit 13 to start the tightening work of the screw (S8). The controller 11 controls the rotation of the tightening unit 13 such that tightening force measured by the measuring unit 14 corresponds to the set value of the tightening force read out from the storage 16. When an error between the tightening force measured by the measuring unit 14 and the set value is within a prescribed allowable range (e.g., ±20% deviation from the set value), the controller 11 stops the operation of the tightening unit 13. The controller 11 causes the wireless communicator 15 to transmit, to the smart device 2, data on the tightening force measured by the measuring unit 14, a work date, work start time, work end time, the identification information of the tool 1, and the like as work information (S9).

The wireless communicator 22 of the smart device 2 receives the work information from the tool 1, and the work information acquirer 211 acquires the work information via the wireless communicator 22 from the tool 1 (S10). That is, the work information acquirer 211 acquires the work information from the tool 1 based on wireless communication. Then, the controller 21 causes the data communicator 27 to transmit the work information thus acquired and the data on the telephone number of the smart device 2 in association with each other to the information management device 3(S11).

The data communicator 32 of the information management device 3 receives the work information and the data on the telephone number from the smart device 2, and the controller 31 acquires the work information and the data on the telephone number from the smart device 2 via the data communicator 32 (S12). Based on the data on the telephone number transmitted together with the work information, the controller 31 identifies the worker H1 who carries out the work. Then, the controller 31 causes the storage 33 to store the work information associated with the personal information of the worker H1.

The controller 31 monitors the work by the worker H1 in accordance with the work information associated with the personal information of the worker H1 (S13). Specifically, the controller 31 detects, based on the work information on the worker H1, the occurrence of an abnormality. For example, if the tightening force is insufficient or if the tightening force is excessive, the controller 31 determines, for example, that the set value of the tightening force is erroneous, or that a work failure occurs. Moreover, if the total work hour per day is too short, or if the interval between a plurality of times of the screw tightening work is too long, the controller 31 determines that the work efficiency is low. Furthermore, the controller 31 can also manage, based on the operational status of the tool 1, the physical condition of the worker H1 and determine the physical condition of the worker H1.

If the controller 31 detects, from a result of monitoring the work carried out by the worker H1, an abnormality (e.g., an erroneous set value of the tightening force, a work failure, reduced work efficiency, a worsened physical condition of the worker H1) (S14), the controller 31 causes the presentation unit 34 to operate to notify the administrator H2 of the occurrence of an abnormality (S15). The display unit 341 displays the content of the abnormality thus detected and the telephone number of the worker H1 as visual information. The loudspeaker device 342 outputs the content of the abnormality thus detected and the telephone number of the worker H1 as auditory information in voice. The administrator H2 can easily check the content of the abnormality thus detected and the telephone number of the worker H1 by the presentation unit 34.

If the abnormality is detected, the administrator H2 inputs, to the communication terminal 4, the telephone number of the smart device 2 carried by the worker H1, and thereby, the administrator H2 makes a call from the communication terminal 4 over the public communication network NT1 to the smart device 2 (S16). When the call controller 213 of the smart device 2 receives the call incoming from the communication terminal 4 (S17), the worker H1 gives an operation to the operating unit 24 to allow a telephone network to be connected between the voice communicator 26 of the smart device 2 and the communication terminal 4 (S18). That is, between the voice communicator 26 and the communication terminal 4, telephonic communication (a talk) becomes possible, and the telephonic communication allows direct conversation between the worker H1 and the administrator H2.

Thus, the administrator H2 can rapidly check the telephone number of the worker H1, and therefore, the administrator H2 can hold a conversation directly with the worker H1 by the telephonic communication, thereby immediately confirming the abnormality thus detected with the worker H1 (S19). That is, the work management system WM1 enables a questionable point, if any, in the work information to be confirmed with the worker H1. As a result, monitoring of work at a construction site, prevention of accidents, management of the physical condition of the worker H1, and the like can be rapidly performed.

### (7) Variation

The telephone number transmitter 212 of the smart device 2 preferably includes a time of generation of the request from the information management device 3 in a timing at which the data on the telephone number is transmitted to the information management device 3. In this case, the controller 31 of the information management device 3 causes the data communicator 32 to transmit an acquisition request to the smart device 2. When the telephone number transmitter 212 of the smart device 2 receives the acquisition request, the telephone number transmitter 212 causes the data communicator 27 to transmit the data on the telephone number to the information management device 3. A transmission timing of the acquisition request by the controller 31 is set, for example, for the smart device 2 executing the application for the work, at a certain time intervals. Note that the transmission timing of the acquisition request by the controller 31 is not limited to a specific timing but may be an arbitrary timing.

### (8) Summary

A work management system (WM1) of a first aspect according to the embodiment described above includes a tool (1), a work information acquisition device (2), and an information management device (3). The tool (1) is to be used to carry out work onto a work target. The work information acquisition device (2) is configured to acquire work information on a content of the work from the tool (1). The information management device (3) is configured to acquire the work information from the work information acquisition device (2). The work information acquisition device (2) includes a voice communicator (26) and a telephone number transmitter (212). The voice communicator (26) is configured to perform telephonic communication by using a telephone number over a public communication network (NT1). The telephone number transmitter (212) is configured to transmit data on the telephone number to the information management device (3) at at least one of a timing at which the work is started or a timing at which a request from the information management device (3) is generated. The information management device (3) includes a presentation unit (34) configured to present the telephone number in accordance with the data on the telephone number received from the telephone number transmitter (212).

The work management system (WM1) enables a questionable point, if any, in the work information to be immediately confirmed with the worker (H1).

In a work management system (WM1) of a second aspect according to the embodiment described above, referring to the first aspect, the work information acquisition device (2) is preferably a portable smart device.

The work management system (WM1) enables a questionable point, if any, in the work information to be immediately confirmed with the worker (H1) by making a phone call to the smart device carried by the worker (H1).

In a work management system (WM1) of a third aspect according to the embodiment described above, referring to the first or second aspect, the work information acquisition device (2) preferably further includes a work information acquirer (211) configured to acquire the work information from the tool (1) by wireless communication.

The work management system (WM1) easily acquires the work information from the tool (1).

In a work management system (WM1) of a fourth aspect according to the embodiment described above, referring to any one of the first to third aspects, the presentation unit (34) is preferably configured to display the telephone number.

The work management system (WM1) enables the telephone number to be easily checked.

A work information acquisition device (2) of a fifth aspect according to the embodiment described above is configured to acquire work information on a content of work from a tool (1) to be used to carry out the work onto a work target. The work information acquisition device (2) includes a voice communicator (26)and a telephone number transmitter (212). The voice communicator (26) is configured to perform telephonic communication by using a telephone number over a public communication network (NT1). The telephone number transmitter (212) is configured to transmit data on the telephone number to an information management device (3) at at least one of a timing at which the work is started or a timing at which a request from the information management device (3) is generated.

The work information acquisition device (2) enables a questionable point, if any, in the work information to be immediately confirmed with the worker (H1).

An information management device (3) of a sixth aspect according to the embodiment described above is configured to acquire the work information from the work information acquisition device (2) of the fifth aspect. The information management device (3) includes a presentation unit (34) configured to present the telephone number in accordance with data on the telephone number received from the telephone number transmitter (212).

The information management device (3) enables a questionable point, if any, in the work information to be immediately confirmed with the worker (H1).

A program of a seventh aspect according to the embodiment described above is configured to cause a computer system to function as a work information acquisition device configured to acquire work information on a content of work from a tool (1) to be used to carry out the work onto a work target. The program is configured to cause the computer system to function as a call controller (213) and a telephone number transmitter (212). The call controller (213) is configured to control a voice communicator (26) configured to perform telephonic communication by using a telephone number over a public communication network (NT1). The telephone number transmitter (212) is configured to transmit data on the telephone number to an information management device (3) at at least one of timing at which the work is started or a timing at which a request from the information management device (3) is generated.

The program enables a questionable point, if any, in the work information to be immediately confirmed with the worker (H1).

A program of an eighth aspect according to the embodiment described above is configured to cause a computer system to function as an information management device (3) configured to acquire the work information from the work information acquisition device (2) of the fifth aspect. The program is configured to cause the computer system to function as a controller (31) configured to cause a presentation unit (34) to present the telephone number in accordance with data on the telephone number received from the telephone number transmitter (212).

The program enables a questionable point, if any, in the work information to be immediately confirmed with the worker (H1).

### Reference Signs List

- WM1: Work Management System
- 1: Tool
- 2: Smart Device (Work Information Acquisition Device)
- 211: Work Information Acquirer
- 212: Telephone Number Transmitter
- 213: Call Controller
- 26: Voice Communicator
- 3: Information Management Device
- 31: Controller
- 34: Presentation Unit
- NT1: Public Communication Network

## Claims

1. A work management system, comprising:
a tool to be used to carry out work onto a work target;
a work information acquisition device configured to acquire work information on a content of the work from the tool; and
an information management device configured to acquire the work information from the work information acquisition device,
the work information acquisition device including
a voice communicator configured to perform telephonic communication by using a telephone number over a public communication network and
a telephone number transmitter configured to transmit data on the telephone number to the information management device at at least one of a timing at which the work is started or a timing at which a request from the information management device is generated,
the information management device including a presentation unit configured to present the telephone number in accordance with the data on the telephone number received from the telephone number transmitter.

2. The work management system of claim 1, wherein
the work information acquisition device is a portable smart device.

3. The work management system of claim 1 or 2, wherein
the work information acquisition device further includes a work information acquirer configured to acquire the work information from the tool by wireless communication.

4. The work management system any one of claims 1 to 3, wherein
the presentation unit is configured to display the telephone number.

5. A work information acquisition device configured to acquire work information on a content of work from a tool to be used to carry out the work onto a work target, the work information acquisition device comprising:
a voice communicator configured to perform telephonic communication by using a telephone number over a public communication network; and
a telephone number transmitter configured to transmit data on the telephone number to an information management device at at least one of a timing at which the work is started or a timing at which a request from the information management device is generated.

6. An information management device configured to acquire the work information from the work information acquisition device of claim 5, the information management device comprising a presentation unit configured to present the telephone number in accordance with the data on the telephone number received from the telephone number transmitter.

7. A program configured to cause a computer system to function as a work information acquisition device configured to acquire work information on a content of work from a tool to be used to carry out the work onto a work target, the program being configured to cause the computer system to function as
a call controller configured to control a voice communicator configured to perform telephonic communication by using a telephone number over a public communication network and
a telephone number transmitter configured to transmit data on the telephone number to an information management device at at least one of a timing at which the work is started or a timing at which a request from the information management device is generated.

8. A program configured to cause a computer system to function as an information management device configured to acquire the work information from the work information acquisition device of claim 5, the program being configured to cause the computer system to function as a controller configured to cause a presentation unit to present the telephone number in accordance with data on the telephone number received from the telephone number transmitter.
